# EUROPEAN PATENT APPLICATION

(11) **EP 3 248 945 A1**
(43) Date of publication of application: **29.11.2017**
(21) Application number: 17170977.7
(22) Date of filing: 15.05.2017
(51) Int. Cl.: C02F 1/24, B03D 1/14, B04C 7/00, C02F 1/38, C02F 103/20

(54) **WATER TREATMENT UNIT**

(30) Priority: 25.05.2016 IT UA20163784
(71) Applicant: Acqua & Co Srl., 42023 Cadelbosco Di Sopra (Reggio Emilia) (IT)
(72) Inventor: MAGNANINI, Giovanni, 42122 REGGIO EMILIA (IT)
(74) Representative: Paparo, Aldo

(57) **Abstract**

A water treatment unit (1) comprising a container (2), exhibiting an inlet section (4) of a flow of water to be treated and air and at least an outlet section (5) of the treated water arranged inferiorly to the inlet section (4), and feeding means (7) configured and/or arranged in such a manner as to generate a cyclonic descending flow (F1).

The unit comprises a separating structure (9) that delimits an annular-shaped outer chamber (CE) and that defines internally at least a first inner chamber (C1) in communication with the outer chamber (CE).

The annular outer chamber (CE) is the seat of the cyclonic descending flow (F1) and of a first ascending water and air flow (F2) originated from the cyclonic descending flow (F1).

The first inner chamber (C1) defines a first descending water flow (F3) originated from the first ascending flow (F2) and directed towards the outlet section 5.

## Description

The present invention relates to a water treatment unit.

The waste of water resources and the disposal of polluting substances are issues that have been at the forefront in the past few years; in particular such issues concern above all those plants that use considerable quantities of water for the cleaning of machinery apparatuses or for animal husbandry or cultivation of plants or yet again for the treatment of food substances.

In each of these cases, water, after having been used, may contain detergents, additives, organic substances or polluting products that make its disposal difficult.

In other cases, depending on the point of abstraction of the water and depending on the intended use of the abstracted water, the water must be improved/purified/sanitised/reclaimed before being managed.

A partial solution to the aforementioned issues derives from the use of suitable water treatment units.

The type of water treatment unit to which reference is made herein is that of the type in which the water is oxygenated and/or degassed, cleaned and separated from the substances dispersed in it, so that it may be possibly enriched and reused in the manner most suitable to the needs of the specific use. Simultaneously or independently, through such treatment it is possible to collect and separate the waste substances contained in the water and dispose of them in the most suitable manner.

This invention finds particular application, in addition, in the fishing sector, in the mussel farming one or in the management of aquariums.

For example, in fact, fish or mussels contain or produce organic substances or small waste particles that muddy and contaminate the water, making it impure.

It is necessary to oxygenate and clean the water to preserve the health of the organisms in it: therefore, a saturation and/or floating process is applied.

Saturation is a process that concentrates in the water a specific gas, such as for example oxygen, while floating is a process that removes from the water the organic substances or the small waste particles in suspension exploiting the coagulation of such substances around air bubbles artificially created in the water. In other words, organic substances and more in general the surfactant substances dispersed in the water present molecules having a polar, and thus hydrophilic, end and a dipolar, and thus hydrophobic,.

The bubbles rising to the surface attract the dipolar end of the molecule with the polar portion facing the water. When the bubbles reach the water free surface, the particles attached to the surface of the bubble prevent it from bursting; the agglomeration of multiple bubbles forms the foam to be disposed of.

The current water treatment units, also commonly called oxygen saturation devices or foaming devices, comprise a column container within which the water abstracted from the cultivation and storing tanks or from the aquariums, is introduced in order to be adequately oxygenated, cleaned and reused.

The column container is surmounted by a chamber within which the foam to be disposed of is collected. The bottom portion of the container and the upper chamber are connected to each other through an overturned funnel-shaped conduit, whose widest section is connected to the upper end of the container, and wherein the neck, facing upward, projects out inside the foam collection chamber.

A flow of water to be treated mixed with gas is introduced in the container in the upper portion of the same through an injection device placed tangentially to the inner surface of the container, so as to generate a whirling motion within the container, in particular a peripheral cyclonic whirling motion descending towards the bottom of the container.

The flow of the gaseous mix once having reached the bottom of the container, due to the presence of air bubbles, rises upward. The bubbles, during the ascent, adsorb the waste substances until they accumulate on the water free surface of the water to be treated contained in the container as foam. The foam ascends along the overturned funnel-shaped conduit and falls within the collection chamber, where it is liquefied (for example through the adoption of water sprays) and finally conveyed outside through special waste conduits.

Often, however, the result of these water treatments of a known type may not be fully satisfactory and effective to allow for a correct disposal of the substances/particles to be removed (hereinafter for simplicity reference shall be made to the term "dirt" to generically identify the substances and particles contained in the water to be treated and those to be removed and disposed of through the treatment unit).

Often, in addition, the units of a known type are not capable of handling different kinds of water to be treated, which may require different quality and purity treatment parameters based on the needs.

In this context, the technical task underpinning the present invention is to provide a water treatment unit that obviates one or more drawbacks of the prior art as cited above.

In particular, it is an aim of the present invention to make available a water treatment unit that improves the effectiveness and efficiency of the treatment process, allowing obtaining a treated water with excellent characteristics of purity.

An additional aim of the present invention is to propose a water treatment unit that is versatile to use and easily adaptable to the specific needs of the user.

The set technical task and the specified aims are substantially attained by a water treatment unit, comprising the technical characteristics set out in one or more of the appended claims.

In particular, the present invention envisages a water treatment unit comprising a container exhibiting an outer side wall that internally delimits a containment volume of water to be treated, wherein the container further exhibits an inlet section for a flow of water to be treated and at least an outlet section of treated water that is arranged inferiorly to said inlet section.

The unit includes a collector for the collection of foam, disposed in an upper part of the container, and feeding means of the flow of water to be treated and gas, disposed within the inlet section and configured and/or arranged in such a manner as to generate a cyclonic flow formed by the air and water mixture, descending into the containment volume. Advantageously, the unit further comprises a separating structure disposed within the containment volume. The separating structure delimits, in cooperation with the outer side wall of the container, an annular-shaped outer chamber and defines internally at least a first inner chamber in communication with the outer chamber.

The annular outer chamber is the seat of the cyclonic descending flow and of a first ascending water and air flow originated from the cyclonic descending flow.

The first inner chamber defines a first descending water flow originated from the first ascending flow and directed towards at least one outlet section.

Advantageously therefore, thanks to the present invention, the water to be treated is pushed within the container along a specific path that goes through the separating structure, allowing the air bubbles contained in the water to be treated and air mixture to convey as much dirt as possible along their path; in this manner improved adsorption of dirt is ensured through the action of the air bubbles.

In fact, thanks to the presence of the separating structure that creates a tortuous path within the container, the permanence time of the water to be treated and air bubbles within the container is longer than that of the prior art treatment units. Therefore, during the path of the water flow within the container, before the treated water is expelled from the outlet section, a greater quantity of bubbles ascend, having a progressively smaller size as they approach the outlet section, capable to adsorb a greater quantity of dirt.

The dependent claims herein incorporated for reference, correspond to different embodiments of the invention.

Further characteristics and advantages of the present invention will become more apparent from the indicative, and thus non-limiting, description of a preferred, but not exclusive, embodiment of a water treatment unit, as illustrated in the accompanying drawings, in which:

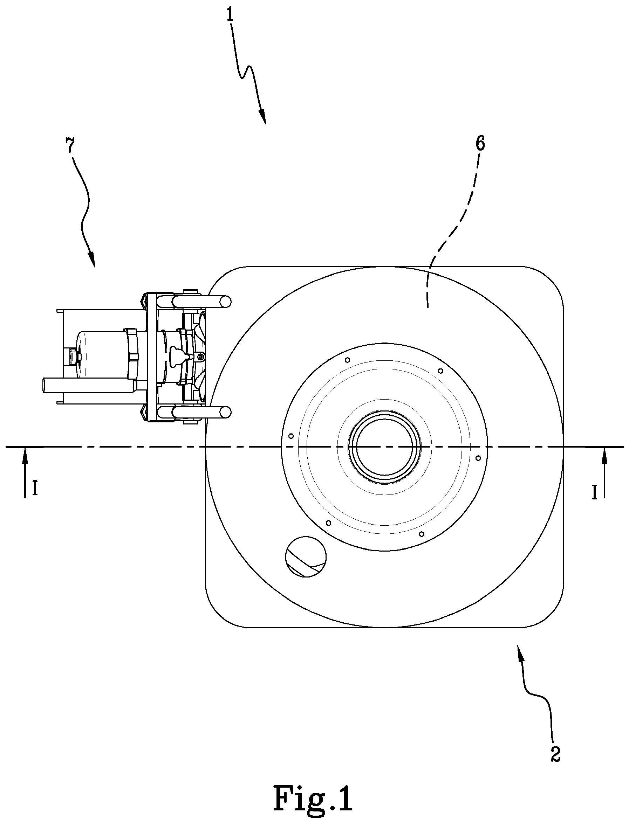

- Figure 1 is a schematic view from above of a water treatment unit according to the present invention,
- Figure 2 is a schematic section along line I-I of the unit shown in figure 1 in a first embodiment of the present invention,
- Figure 3 is a perspective schematic view of the unit shown in figure 2,
- Figure 4 is a schematic section along line I-I of the unit shown in figure 1 in a second embodiment of the present invention,
- Figure 5 is a perspective schematic view of the unit shown in figure 4,
- Figure 6 is a schematic section along line I-I of the unit shown in figure 1 in a third embodiment of the present invention,
- Figure 7 is a possible variant embodiment of the second embodiment of the unit shown in figure 4, and
- Figure 8 is a perspective schematic view of the unit shown in figure 7.
- Figure 9 is a schematic section along line I-I of the unit shown in figure 1 in a fourth embodiment.

With reference to the appended figures, 1 indicates as a whole a water treatment unit, hereinafter simply unit 1. Said unit 1 delimits a volume under pressure.

The unit 1 comprises a container 2 having an outer side wall 3 internally delimiting a containment volume of the water to be treated.

The container 2 exhibits an inlet section 4 for a flow of water to be treated and at least an outlet section 5 of treated water that is arranged inferiorly to said inlet section 4.

Preferably, in the embodiments illustrated in the appended figures, the unit 1 comprises at least two outlet sections 5 in the form of circular openings, arranged radially on the outer side surface 3 of the container 2 (and in particular on the bottom end of said outer side surface 3) at pre-set intervals.

The unit 1 further comprises a collector 6 for the collection of foam (the foam is not illustrated in the appended figures), disposed in an upper part of the container 2 and basically of a known type.

The unit 1 comprises feeding means 7 of the flow of water to be treated and a gas disposed within the inlet section 4 and configured and/or arranged in such a manner as to generate a cyclonic flow, schematically denoted in the figures with the arrows F1, formed by the air and water mixture, descending into the containment volume.

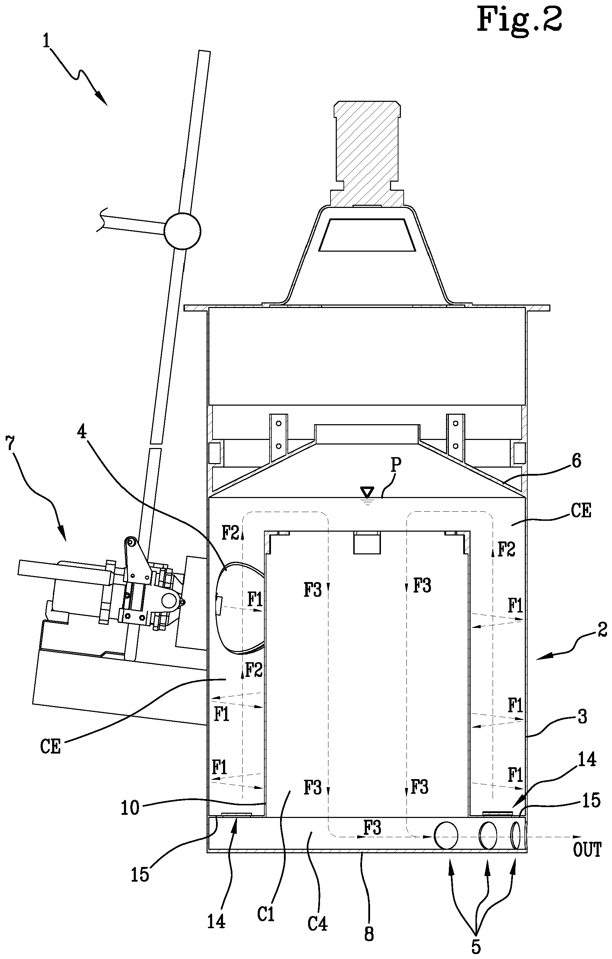

Said gas shall be air, oxygen or ozone; hereinafter in the continuation of this description generically denoted as air to be understood as any one of the aforesaid gases. At the feeding means 7 a multi-way valve (schematically illustrated in figure 2) can be present in fluid communication with a gas source. In this configuration, the feeding means 7 may inject into the inlet section, in addition to the water to be treated, a mix of air, oxygen or ozone or just one of the listed gases.

In other words, the flow of water to be treated gassed with air entering the container 2 generates a whirling motion that follows a descending path toward the bottom 8 of the container 2.

Advantageously, the unit 1 further comprises a separating structure 9 disposed within the containment volume.

The separating structure 9 delimits, in cooperation with the outer side wall 3 of the container 2, an annular-shaped outer chamber CE and defines internally at least a first inner chamber C1 in communication with the outer chamber CE.

In particular, the annular outer chamber CE is the seat of the cyclonic descending flow F1 and of a first ascending water and air flow F2 originated from the cyclonic descending flow F1.

Preferably, the separating structure 9 is a rigid body. Even more preferably, the separating structure is made in plastic or fibreglass material.

Preferably, at least the first inner chamber C1 is interposed between the outlet section 5 and the outer chamber CE. Advantageously in this manner therefore, the flow of water to be treated and air before being expelled from the outlet section 5 must go through the outer chamber CE and at least the first inner chamber C1.

In other words, when the cyclonic flow F1 descending into the outer chamber CE reaches the bottom 8 of the container 2, the first ascending flow F2 is generated and a few air bubbles detach ascending to the water free surface P generating the foam to be disposed of.

The bubbles ascending within the external chamber CE and carrying the dirt towards the upper part of the outer chamber CE, opposite to the bottom 8 of the container 2, i.e. towards the water free surface P of the water to be treated contained in container 2, can be generally identified using the term bubbles.

Some of the bubbles contained in the first ascending flow F2 once having reached the water free surface P detach from the first ascending flow F2 and generate the foam.

The first inner chamber C1 defines a first descending water flow F3 originated from the first ascending flow F2 and directed towards an outlet section 5.

Advantageously, during the descending path of the water flow in correspondence of the first descending flow F3, the adsorption of the bubbles continues and some of them, instead of continuing their path towards the outlet section 5, detach from the first descending flow F3 and ascend again towards the water free surface P advantageously allowing a further disposal of the dirt contained in the water to be treated introduced in the unit 1 and the generation of additional foam.

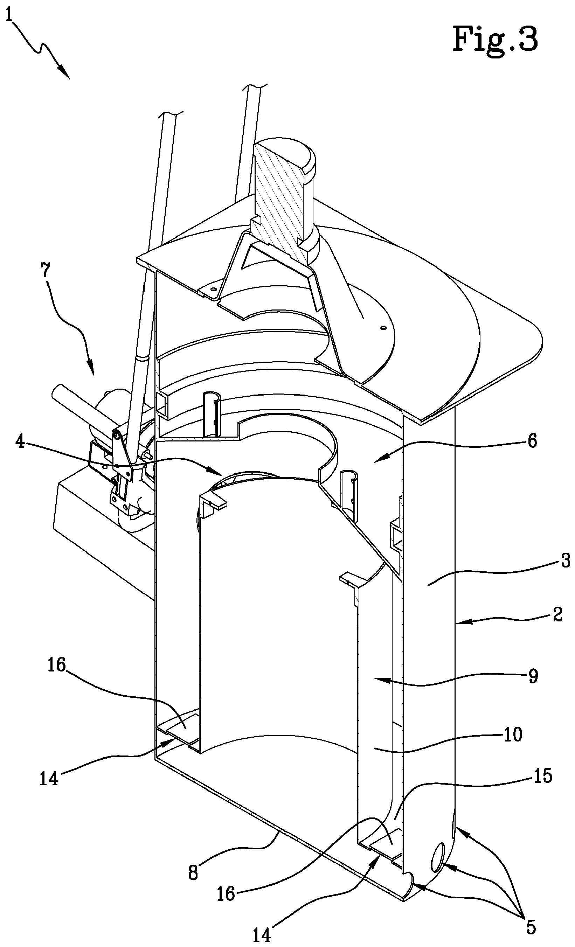

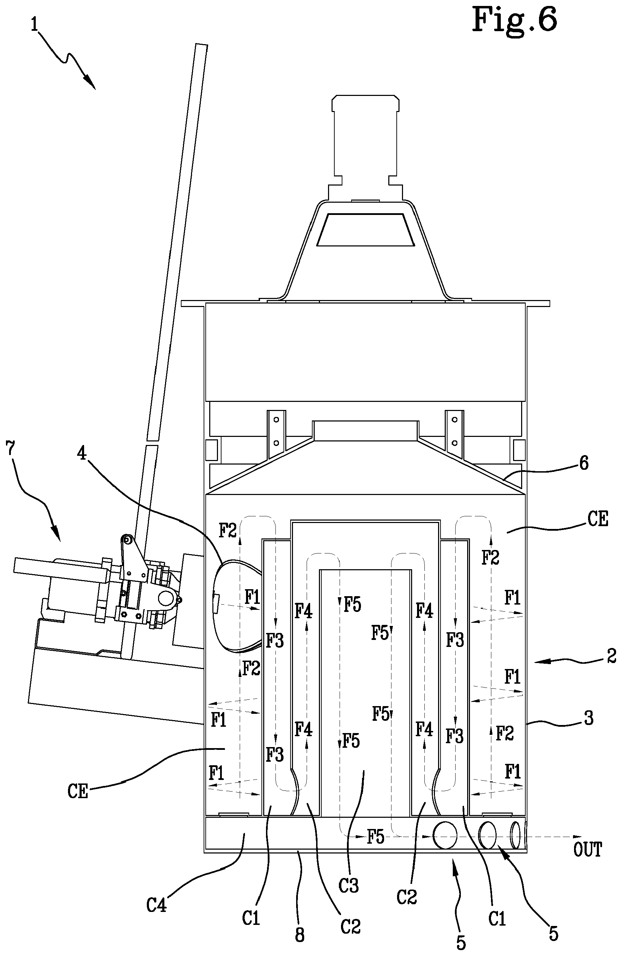

With reference to the first embodiment (illustrated in figures 2 and 3) and the third embodiment (illustrated in figure 6) of the present invention, preferably the separating structure 9 comprises a first separation wall 10, even more preferably tubular and/or cylindrical in shape, inferiorly connected to a bottom closing wall 15, preferably having an annular shape.

Said bottom closing wall 15 presents a position parallel to the bottom 8 and delimits, along with the first separation wall 10, the outer chamber CE. Preferably, in said embodiments the first separation wall 10 has an outer surface facing the annular outer chamber CE and an inner surface facing the first inner chamber C1. The bottom closing wall 15 further presents its top facing the outer chamber CE while the base faces the bottom. Thanks to the presence of the first separation wall 10, the cyclonic descending flow F1 is forced to proceed exclusively inside the outer chamber CE and the first ascending flow F2 ascending inside the outer chamber CE turns, at the interface between the outer chamber CE and the first inner chamber C1, into the first descending flow F3.

In this equipment configuration, the inversion of motion direction of the cyclonic descending flow F1, towards the first ascending flow F2, takes place thanks to the presence of the bottom closing wall 15.

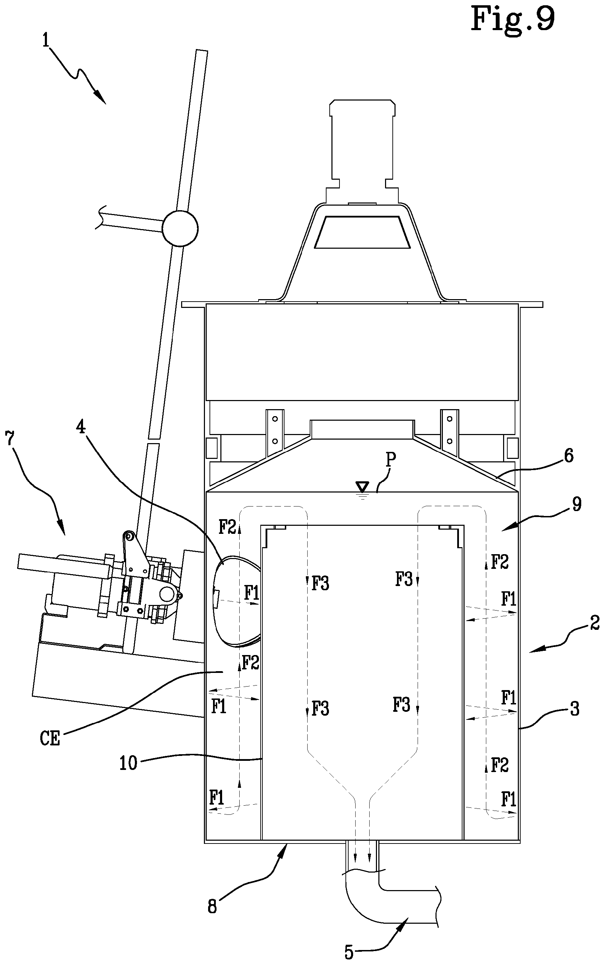

With reference to Figure 9, the separating structure 9 comprises a first separation wall 10, even more preferably tubular and/or cylindrical in shape, resting on the bottom 8.

Preferably, in the embodiment of Figure 9 the first separation wall 10 has an outer surface facing the annular outer chamber CE and an inner surface facing the first inner chamber C1.

Thanks to the presence of the first separation wall 10, the cyclonic descending flow F1 is forced to proceed exclusively inside the outer chamber CE and the first ascending flow F2 ascending inside the outer chamber CE turns, at the interface between the outer chamber CE and the first inner chamber C1, into the first descending flow F3.

In this equipment configuration, the inversion of motion direction of the cyclonic descending flow F1, towards the first ascending flow F2, takes place thanks to the presence of the bottom 8.

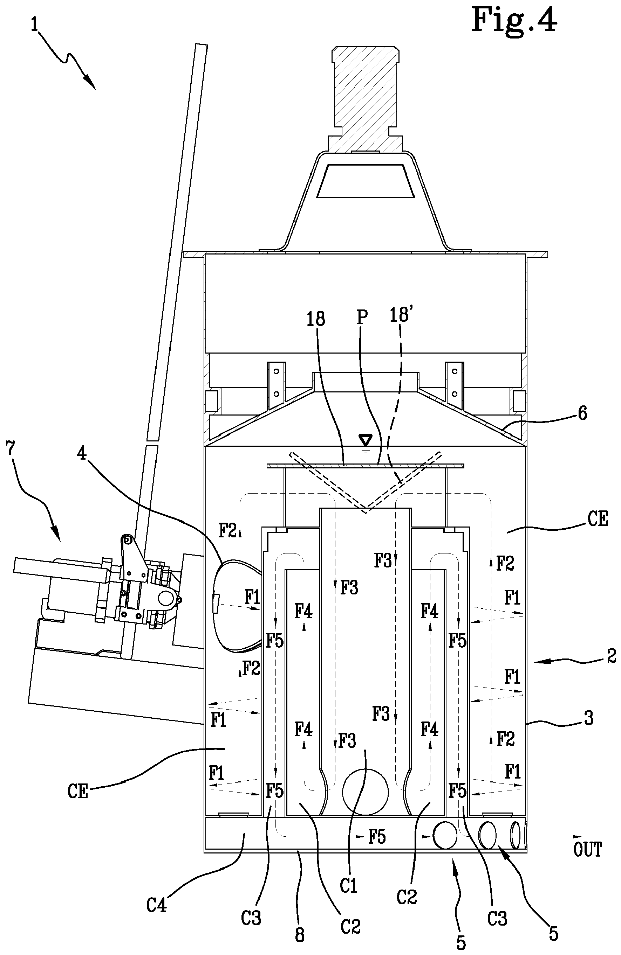

With reference to Figures 4-8, referring to specific variants of the invention, the separating structure 9 further comprises a labyrinth 11 interposed between the first inner chamber C1 and the outlet section 5 to define a second inner chamber C2, seat of a second ascending flow F4 of water originated from the first descending flow F3, and a third inner chamber C3, seat of a subsequent second descending flow F5 of water originated from the second ascending flow F4.

Advantageously therefore, the separating structure 9 thanks to the presence of the labyrinth 11 defines a tortuous path with sudden changes of direction within the containment volume, which allows increasing the permanence time of the water to be treated and air inside the container 2 and therefore increasing the permanence time of the bubbles in the water, so as they may adsorb the greatest amount of dirt and increase the gaseous air-to-water exchange in such a way that the water exiting the outlet section 5 has excellent characteristics of purity and is more oxygenated.

Even more preferably, with reference to the third embodiment illustrated in Figure 6, the first inner chamber C1 and the second inner chamber C2 have an annular shape while the third inner chamber C3 has a solid, preferably circular cross-section.

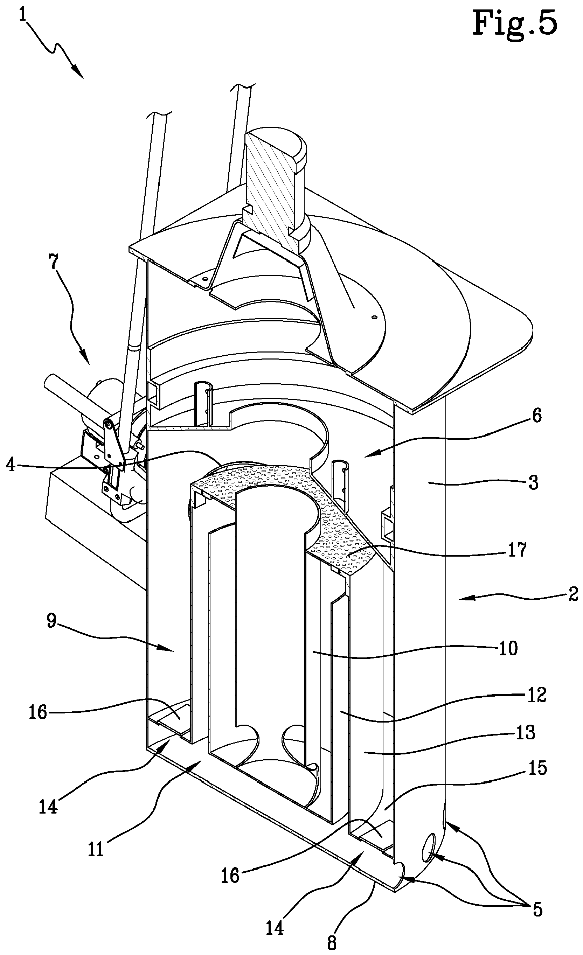

Even more preferably, with reference to the second embodiment illustrated in Figures 4 and 5, the second inner chamber C2 and the third inner chamber C3 have an annular shape, while the first inner chamber C1 has a solid, preferably circular cross-section.

Further to be noted is that the number of inner chambers may vary and be sized based on specific user's design needs.

The fluid dynamic push of the water and air mixture at the inlet introduced by the feeding means 7 along with the water pressure gradients within the containment volume due to the presence of the outlet sections, advantageously ensures that the water to be treated follows a specific path within the container 2 passing through the separating structure 9. The presence of a labyrinth 11 additionally increases the length of the path that the water must follow before being expelled from the unit 1.

The first descending flow F3 therefore passing from the first inner chamber C1 to the second inner chamber C2 turns into the second ascending flow F4. Some of the air bubbles contained in the second ascending flow F4 ascending along the second inner chamber C2 detach from the second ascending flow F4 and, after having crossed a perforated top closing wall 17, pop up on the water free surface P generating additional foam. These bubbles can be identified with the term "micro-bubbles".

The second ascending flow F4 passing from the second inner chamber C2 to the third inner chamber C3 turns into the second descending flow F5 and the bubbles still contained in said flow can be identified with the term "nano-bubbles".

The flow of exiting treated water OUT is therefore advantageously a flow of purified water that can be reused for further applications.

With reference to the second embodiment of the present invention illustrated in Figures 4 and 5, preferably the separating structure 9 comprises a first separation wall 10 interposed between the outer chamber CE and the first inner chamber C1 and the labyrinth 11 comprises a second separation wall 12 and a third separation wall 13, in which the first separation wall 10 and the second separation wall 12 delimit the second inner chamber C2 therebetween, and wherein the second separation wall 12 and the third separation wall 13 delimit the third inner chamber C3 therebetween.

According to the present invention, preferably the first separation wall 10 and/or the second separation wall 12 and/or the third separation wall 13 have a preferably cylindrical tubular shape.

According to the present invention, preferably the outer side wall 3 of the container 2 has a preferably cylindrical tubular shape and the first separation wall 10 and/or the second separation wall 12 and/or the third separation wall 13 are arranged coaxially to the outer side wall 3 of the container 2.

Still with reference to the second embodiment, the unit 1 further comprises a separation wall 18, illustrated in section in Figure 4.

Said separation wall 18 is connected to the unit 1 by way of extendible arms connected to the separating structure 9 or to the collector 6.

Said wall 18 has the function of avoiding the formation of a whirling motion in a central area of the volume of the water to be treated and next to the water free surface P.

Said wall 18, preventing the formation of a vortex, avoids the breaking up of the foam which generally tends to agglomerate at the centre of the water free surface P.

As a further beneficial effect, the wall localises the formation of a calm water volume useful to form further foam.

As illustrated in Figure 4, 18 indicates a first embodiment of a separation wall, having a circular shape and represented in section with a solid line, while 18' represents a second embodiment of the separation wall, having a conic shape and represented with a dashed line with vertex of the cone facing downward.

The conic shape is preferable to the circular shape since it favours the dispersion of the ascending bubbles.

With reference then to the third embodiment, illustrated in Figure 9, the separating structure 9 is defined exclusively by a first separation wall 10, resting inferiorly on the bottom 8, interposed between the outer chamber CE and the first chamber C1.

In said configuration the outlet sections 5 are formed in the bottom 8.

According to the present invention also preferably the container 2 comprises at least one closable by-pass opening 14 disposed between the annular outer chamber CE and the outlet sections 5.

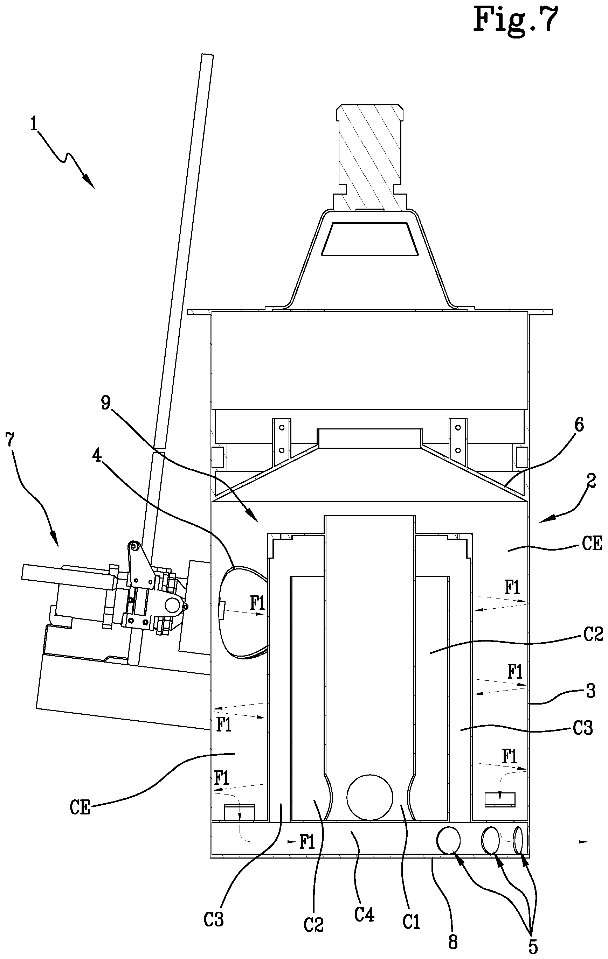

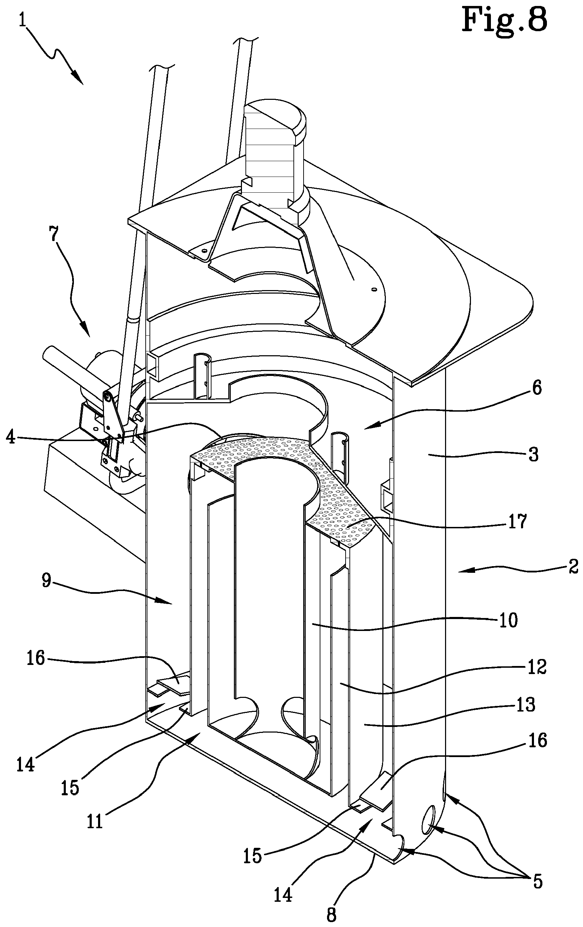

In the embodiments illustrated in Figures 2-6 the by-pass openings 14 have a closed configuration, avoiding therefore a direct fluid communication between the outer chamber CE and the outlet sections 5. For example, Figures 7 and 8 illustrate instead a variant of the second embodiment of the unit 1, in which the by-pass openings 14 are in an open configuration allowing direct fluid communication between the outer chamber CE and the outlet sections 5. Advantageously in this manner it is possible to by-pass the separating structure 9 and it is possible to proceed with a rapid expulsion of the treated water from the container 2. The water introduced in the unit in this case is not subjected to passage through the separating structure 9, therefore all the air bubbles ascend directly toward the water free surface P. This embodiment solution can be particularly handy when the user has the need to treat the water quickly or in the case of significant polluting load (performing a higher performance purification process in a second moment).

Preferably, at least a by-pass opening 14 is formed on a bottom closing wall 15 of the annular outer chamber CE and is associated with at least one respective closing door 16.

Preferably, the closing door 16 is hinged about an horizontal axis and, in a configuration of an at least partial opening (for example approximately 45°) is basically oriented parallel to the tangential trajectory of the cyclonic descending flow F1 in order to act as a conveyor of the cyclonic descending flow F1 towards an outlet section 5 located below. Advantageously therefore, the bottom closing wall 15 of the outer chamber CE defines inferiorly an expulsion chamber C4 wherein the first descending flow F3 (in the case of absence of the labyrinth 11, and if applicable of by-pass openings 14 in closed configuration) or the cyclonic descending flow F1 (in the case of by-pass openings 14 in open configuration) or the second descending flow F5 (in the case of by-pass openings 14 in closed configuration) can be expelled from the outlet sections 5.

Advantageously the above shows how the unit 1 according to the present invention is a particularly versatile and performing device thanks to the possibility of opening and closing the by-pass openings 14 and/or the possibility to set up a specific labyrinth 11 for the type of treatment to be performed.

With reference to Figures 4-6 and 8, preferably furthermore the separating structure 9 is configured to define a connection area between the second inner chamber C2 and the third inner chamber C3, wherein the connection area is arranged in an upper portion of the labyrinth 11 and superiorly delimited by a top closing wall 17.

Advantageously the top closing wall 17 is perforated to allow a better migration of air bubbles toward the collector 6.

In particular the micro bubbles that detach from the second ascending flow F4 and the second descending flow F5 can ascend toward the water free surface P and accumulate on the foam to be removed together with the dirt they have adsorbed.

The present invention achieves the proposed aims obviating the drawbacks lamented in the prior art and making available to the user an efficient device adaptable to the specific treatment needs requested. The presence of the separating structure 9 in particular allows extending the permanence time of the water and air within the containment volume favouring the adsorption of dirt by way of the air bubbles that progressively purify the water separating it from the foam to be disposed of.

## Claims

1. A water treatment unit (1) comprising:
- a container (2) exhibiting an outer side wall (3) that internally delimits a containment volume of water to be treated, said container (2) further exhibiting an inlet section (4) for a flow of water to be treated and an air flow, and at least an outlet section (5) of treated water that is arranged inferiorly to said inlet section (4),
- a collector (6) for the collection of foam, disposed in an upper part of the container (2),
- feeding means (7) of said flow of water to be treated and air flow, disposed within said inlet section (4) and configured and/or arranged in such a manner as to generate a cyclonic flow (F1) formed by said air and water mixture, descending into the containment volume;
**characterized in that** it further comprises a separating structure (9) disposed within said containment volume, wherein said separating structure (9) delimits, in cooperation with the outer side wall (3) of the container (2), an annular-shaped outer chamber (CE) and defines internally at least a first inner chamber (C1) in communication with said outer chamber (CE); wherein said annular outer chamber (CE) is the seat of said cyclonic descending flow (F1) and of a first ascending water and air flow (F2) originated from said cyclonic descending flow (F1), and wherein said first inner chamber (C1) defines a first descending water flow (F3) originated from said first ascending flow (F2) and directed towards said at least one outlet section (5).

2. The unit (1) according to claim 1, in which said separating structure (9) comprises a first separation wall (10), preferably tubular and/or cylindrical in shape with an outer surface thereof facing said outer annular chamber (CE) and an inner surface facing said first inner chamber.

3. The unit (1) according to claim 1 or 2, in which said separating structure (9) further comprises a labyrinth (11) interposed between said first inner chamber (C1) and said at least one outlet section (5) to define a second inner chamber (C2), being the seat of a second ascending flow (F4) of water originated from said first descending flow (F3), and a third inner chamber (C3), being the seat of a subsequent second descending flow (F5) of water originated from said second ascending flow (F4).

4. The unit (1) according to claim 3 when dependent from claim 1, in which said separating structure (9) comprises a first separation wall (10) interposed between the outer chamber (CE) and the first inner chamber (C1) and wherein said labyrinth (11) comprises a second separation wall (12) and a third separation wall (13), in which the first separation wall (10) and the second separation wall (12) delimit said second inner chamber (C2) therebetween, and wherein the second separation wall (12) and the third separation wall (13) delimit said third inner chamber (C3) therebetween.

5. The unit (1) according to claim 2 or 3, wherein the first inner chamber (C1) and the second inner chamber (C2) have an annular shape, and wherein the third inner chamber (C3) has a solid, preferably circular cross-section.

6. The unit (1) according to claim 3 or 4, wherein the second inner chamber (C2) and the third inner chamber (C3) have an annular shape and in which the first inner chamber (C1) has a solid, preferably circular cross-section.

7. The unit (1) according to any one of the preceding claims, in which said first separation wall (10) and/or said second separation wall (12) and/or said third separation wall (13) have a preferably cylindrical tubular shape.

8. The unit (1) according to any one of the preceding claims, in which the outer side wall (3) of the container (2) has a preferably cylindrical tubular shape and wherein said first separation wall (10) and/or said second separation wall (12) and/or said third separation wall (13) are arranged coaxially to the outer side wall (3) of the container (2).

9. The unit (1) according to any one of the preceding claims, wherein the container (2) further comprises at least one closable by-pass opening (14), disposed between the annular outer chamber (CE) and said at least one outlet section (5).

10. The unit (1) according to claim 9, wherein said at least one by-pass opening (14) is formed on a bottom closing wall (15) of the annular outer chamber (CE) and is associated with at least one respective closing door (16).

11. The unit (1) according to claim 10, wherein said closing door (16) is hinged about an horizontal axis and, in a configuration of an at least partial opening, it is basically oriented parallel to the tangential trajectory of the cyclonic descending flow (F1) in order to act as a conveyor of the cyclonic descending flow (F1) towards an outlet section (5) located below.

12. The unit (1) according to claim 3, in which said separating structure (9) is configured to define a connection area between the second inner chamber (C2) and the third inner chamber (C3), said connecting area being arranged in an upper portion of the labyrinth (11) and being superiorly delimited by a top closing wall (17), said upper closing wall being perforated, thereby enabling a migration of air bubbles towards said collector (6).

13. The unit (1) according to claim 3, in which said separating structure (9) further comprises a separation wall (18), located above the labyrinth (11) and interposed between the latter and the water free surface (P), in order to avoid formation of a whirling motion in a central area of the volume of the water to be treated and next to the water free surface (P).
